(19) Europäisches Patentamt
European Patent Office
Office européen des brevets

(11) **EP 1 628 517 B1**

(12) **FASCICULE DE BREVET EUROPEEN**

(45) Date de publication et mention
de la délivrance du brevet:
**02.09.2009 Bulletin 2009/36**

(21) Numéro de dépôt: **04742735.6**

(22) Date de dépôt: **14.05.2004**

(51) Int Cl.:
***A01D 34/416*** *(2006.01)*

(86) Numéro de dépôt international:
**PCT/FR2004/001186**

(87) Numéro de publication internationale:
**WO 2004/100646 (25.11.2004 Gazette 2004/48)**

(54) **NOUVEAU FIL DE COUPE POUR APPAREILS TELS QUE TAILLE-BORDURES OU DEBROUSSAILLEUSES**

NEUARTIGER SCHNEIDDRAHT FÜR VORRICHTUNGEN WIE KANTENSCHNEIDER ODER HECKENSCHNEIDER

NOVEL CUTTING WIRE FOR DEVICES SUCH AS EDGE TRIMMERS OR BRUSH CUTTERS

(84) Etats contractants désignés:
**BE DE FR IT SE**

(30) Priorité: **14.05.2003 FR 0305770**

(43) Date de publication de la demande:
**01.03.2006 Bulletin 2006/09**

(73) Titulaire: **Speed France S.A.S.
69400 Arnas (FR)**

(72) Inventeur: **LEGRAND, Emmanuel
01240 ST GERMAIN SUR RENON (FR)**

(74) Mandataire: **Le Forestier, Eric et al
Cabinet Régimbeau
20, rue de Chazelles
75847 Paris cedex 17 (FR)**

(56) Documents cités:
**EP-A- 0 867 108        DE-C- 4 321 650
US-A- 5 709 942        US-A- 6 061 914**

• **DATABASE WPI Section Ch, Week 198816
Derwent Publications Ltd., London, GB; Class
A23, AN 1988-109970 XP002045232 & JP 63
059812 A (TORAY MONOFILAMENT CO) 15 mars
1988 (1988-03-15)**

**Description**

La présente invention concerne d'une façon générale les fils pour tailler ou couper les végétaux, et en particulier des fils destinés à être monté sur des têtes rotatives d'appareils de motoculture telles que des débroussailleuses ou de taille-bordures.

Classiquement, un tel fil est réalisé sous forme d'un monofilament en matière synthétique, typiquement en polyamide.

Ces fils de coupe ont été grandement améliorés ces dernières années pour aboutir à une plus grande robustesse, à une plus grande efficacité de coupe et à un bruit aérodynamique en fonctionnement qui soit réduit.

Par ailleurs, pour accroître l'efficacité de coupe, et en corollaire d'une plus grande robustesse des fils de coupe, on tend aujourd'hui à faire tourner les têtes rotatives des appareils à des vitesses de plus en plus élevées (typiquement jusqu'à 10 000 tours/minute).

Mais dans de telles circonstances, autant les fils traditionnels que les fils plus évolués démontrent une tendance à présenter un phénomène de collage.

En effet, les vibrations ou autres efforts alors impartis au fil, lors de la rotation de la tête et des sollicitations lorsque le fil frappe les végétaux, créent entre les tronçons de fil adjacents des frottements qui sont suffisamment importants pour échauffer le fil superficiellement, et provoquer un collage.

Ce phénomène se produit en particulier dans les appareils où le fil est sur bobine et, à tout le moins, perturbe grandement le dévidage automatique du fil.

Quelle que soit son origine, un tel collage se manifeste par une adhésion plus ou moins forte de la superficie du fil avec une partie de fil (ou un autre brin). Dans des cas extrêmes, les fils sont irrémédiablement collés, et la bobine (ou les brins) est perdue.

Dans des cas de collage plus modéré, on peut certes manuellement procéder au décollage du fil, après avoir précédemment accédé à la bobine dans la tête de coupe. Ceci est néanmoins très fastidieux et occasionne à l'opérateur des pertes de temps considérables. En outre, ce décollage manuel peut conduire à déformer ou arracher des parties superficielles du fil, ce qui peut le fragiliser.

Des problèmes de collage peuvent également se produire non seulement fil contre fil, mais également lors du contact du fil avec d'autres organes de l'appareil (parois de la bobine, passages de tronçon de fil, bloqueurs de fil, etc.), avec des inconvénients variés.

On a déjà tenté dans le passé de résoudre ces problèmes de collage de fil. En particulier, le document EP 0 867 108 A1 au nom de la Demanderesse, qui décrit toutes les caractéristiques du préambule de la revendication 1, décrit un fil de coupe composite comportant un revêtement granuleux ou rugueux sous forme de particules minérales ou de particules de polyamide. La coupe est ainsi améliorée et les phénomènes de collage limités.

Ce fil nécessite un processus de fabrication particulier ,et le revêtement granuleux peut être source de bruit en fonctionnement.

Le document DE 43 21 650 C1 décrit quant à lui un fil de coupe composite avec une peau en polyéthylène partiellement réticulé, de manière à présenter un point de fusion non défini et à limiter les phénomènes de collage. La réticulation nécessite une étape complémentaire (irradiation) dans le processus de fabrication, et l'utilisation de deux matières synthétiques différentes peut s'avérer problématique.

La présente invention vise à atténuer ou pallier ces inconvénients de l'état de l'art, et à proposer un fil de coupe qui, tout en présentant les propriétés habituelles des fils de coupe en polyamide, et ne nécessite pas d'opérations particulières dans le processus de fabrication par rapport à un processus de extrusion/étirage de fil composite, présente des propriétés améliorées vis-à-vis des phénomènes de collage.

Elle propose à cet effet un fil de coupe pour appareil de coupe ou de taille de végétaux, comprenant une âme enrobée d'une peau, où l'âme est constituée d'un polyamide ou d'un copolyamide, et la peau est constituée d'un polyamide ou d'un copolyamide différent de celui de l'âme, caractérisé en ce que le point de fusion du polyamide ou copolyamide constituant la peau est supérieur à celui de l'âme, de manière à limiter les phénomènes de collage notamment par frottements par rapport à ceux qui seraient obtenus avec la matière de l'âme, et en ce que la surface externe de la peau est lisse.

Certains aspects préférés, mais non limitatifs, de ce fil de coupe sont les suivants :

- le point de fusion de l'âme est compris entre environ 190°C et 220°C.
- l'âme est réalisée en polyamide 6.
- l'âme est réalisée en copolyamide.
- le point de fusion de la peau est compris entre environ 250 et 300°C.
- la peau est réalisée en polyamide 66.
- la peau est réalisée en copolyamide 6/66.
- la peau est réalisé en un mélange de polyamide ou copolyamide et d'un polyamide aromatique amorphe.
- l'épaisseur de la peau est comprise entre environ 0,5 % et 25 % du rayon moyen du fil.

D'autres aspects, buts et avantages de la présente invention apparaîtront mieux à la lecture de la description détaillée suivante d'une forme de réalisation préférée de celle-ci, donnée à titre d'exemple non limitatif et faite en référence aux dessins annexés, sur lesquels :

la figure 1 est une vue en perspective d'un tronçon de fil de coupe selon l'invention, et
les figures 2a à 2c sont des vues en coupe de trois fils de coupe présentant d'autres formes de section transversale, selon l'invention.

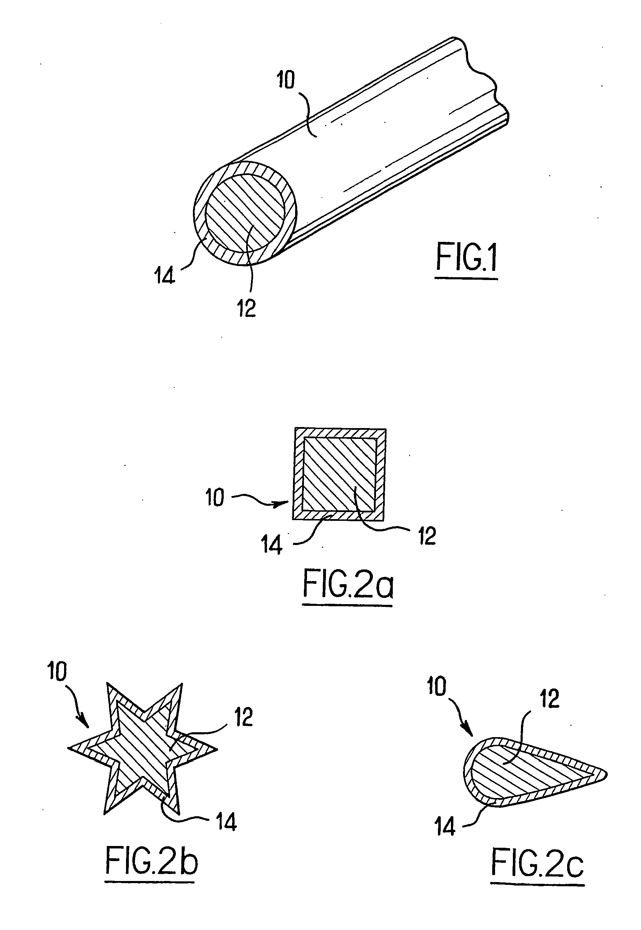

En référence tout d'abord à la figure 1, on a représenté un fil de coupe 10 pour débrousailleuse, taille-bordures ou analogue, qui comprend une âme 12 entourée par une peau 14.

Dans le présent exemple, le fil présente une section transversale circulaire, la peau 14 constituant dans cette section une couronne concentrique avec l'âme 12 et entourant entièrement celle-ci. La surface de la peau 14 est lisse, aucun caractère granuleux n'étant prévu. L'expression « lisse » l'exclut toutefois pas que des aménagements tels que nervures, bossages, rainures, variations de section, dents, etc. soient prévus à une échelle plus grossière, dans le but d'améliorer les performances du fil en fonctionnement (efficacité de coupe, diminution du bruit, pénétration dans l'air, etc.).

L'âme 12 est réalisée en un polyamide ou copolyamide, et de préférence en un polyamide conventionnellement utilisé pour la réalisation de fils de coupe monofilament monomatière. Typiquement, on utilise un polyamide 6, dont le point de fusion est d'environ 220°C. En variante, il peut s'agir d'un copolyamide 6/66 dont le point de fusion est typiquement compris entre 190°C et 220°C.

La peau 14 est réalisée en un polyamide ou copolyamide différent de celui de l'âme, et choisi pour que son point de fusion soit plus élevé que celui de l'âme. De préférence, on utilise un polyamide 66 dont le point de fusion est d'environ 255°C, ou encore un copolyamide 6/66 dont le point de fusion est compris entre 250°C et 270°C.

En variante, on peut utiliser un polyamide 66 additivé avec un polyamide aromatique amorphe, tel que celui commercialisé par la société B.A.S.F. en Allemagne sous la désignation KR4351. Dans ce cas, en faisant varier la proportion de cet additif (typiquement entre 0 et 20 % du poids total), on peut ajuster le point de fusion de ce mélange à une valeur comprise entre 255°C et environ 300°C.

Avantageusement, la peau présente une épaisseur comprise entre environ 0,5 % et 25 % du rayon du fil, ou encore, dans le cas d'un fil de section non circulaire comme on le verra plus loin, du rayon moyen RM de celui-ci, calculé comme :

$$RM = \sqrt{(S/\Pi)}$$

où
S est la surface de la section transversale du fil et $\Pi$ = 3,1416.

Un fil de coupe selon l'invention est réalisé par les techniques classiques de co-extrusion, sans difficulté pour l'homme du métier.

Dans le cas d'un fil de section circulaire, un fil selon l'invention peut être réalisé avec un diamètre typiquement compris entre 1,2 mm et 5 mm, selon l'application envisagée.

Essais

On a comparé le comportement en termes de collage, d'un fil de coupe traditionnel en polyamide 6 d'un diamètre de 3 mm avec un fil de coupe de même diamètre extérieur, réalisé selon l'invention avec une âme 12 en polyamide 6 d'un diamètre de 2,8 mm recouverte par une peau d'une épaisseur de 0,2 mm, réalisée en polyamide 66.

Les essais ont été effectués avec une machine du commerce à bobine de dévidage automatique, avec une vitesse de rotation de la tête de coupe de 7500 tours/minute.

On a observé une disparition de l'ensemble des phénomènes de collage de tronçons adjacents de fil lors de conditions de travail prolongées et/ou difficiles.

En particulier, les coincements de fil dus au collage ont, même après un usage prolongé de quelques heures, totalement disparu avec le fil selon l'invention.

Comme le montrent les figures 2a à 2c, on peut mettre l'invention en oeuvre avec des fils de coupe de sections quelconques, en bobine ou en brins. Sur ces figures comme sur la figure 1, l'âme du fil 10 est désignée par la référence 12, tandis que sa peau est désignée par la référence 14.

Ainsi la figure 2a montre un fil de section généralement carrée, la figure 2b un fil de section en étoile, et la figure 2c un fil de section en aile d'avion.

L'invention s'applique bien entendu aussi à des fils de section non uniforme, tels que des fils présentant des dents pour faciliter la coupe des végétaux, présentant des saillies et/ou encoches pour la réduction du bruit d'origine aérodynamique en fonctionnement, ou encore des fils torsadés, c'est-à-dire dont une section transversale constante ou généralement constante tourne à mesure qu'on se déplace le long du fil.

Bien entendu, de nombreuses autres variantes et modifications peuvent être apportées à l'invention.

En premier lieu, on peut prévoir que la peau 14 n'entoure pas entièrement l'âme 12, et/ou présente une épaisseur variable.

Dans le cas où la peau n'entoure pas entièrement l'âme, elle occupe néanmoins une surface suffisante pour que, lorsque deux tronçons de fil sont en contact l'un avec l'autre, ce contact s'effectue majoritairement au niveau de la matière de la peau. Les risques de collage avec le matériau de l'âme sont ainsi marginalisés.

En deuxième lieu, on peut prévoir que l'âme ne soit pas formée d'un filament unique monomatière, mais d'un faisceau de filaments de section plus petite, ou encore d'une structure multicouches.

En troisième lieu, on peut ajouter à la matière de l'âme ou de la peau tout additif ou produit de charge ayant d'autres buts, pour autant que les propriétés relatives de l'âme et de la peau en termes de résistance au collage restent dans le cadre de la présente invention.

## Revendications

1. Fil de coupe (10) pour appareil de coupe ou de taille de végétaux, comprenant une âme (12) enrobée d'une peau (14), où l'âme est constituée d'un polyamide ou d'un copolyamide, et la peau est constituée d'un polyamide ou d'un copolyamide différent de celui de l'âme, **caractérisé en ce que** le point de fusion du polyamide ou copolyamide constituant la peau (14) est supérieur à celui de l'âme, de manière à limiter les phénomènes de collage notamment par frottements par rapport à ceux qui seraient obtenus avec la matière de l'âme, et **en ce que** la surface externe de la peau est lisse.

2. Fil de coupe selon la revendication 1, **caractérisé en ce que** le point de fusion de l'âme (12) est compris entre environ 190°C et 220°C.

3. Fil de coupe selon la revendication 2, **caractérisé en ce que** l'âme (12) est réalisée en polyamide 6.

4. Fil de coupe selon la revendication 2, **caractérisé en ce que** l'âme (12) est réalisée en copolyamide.

5. Fil de coupe selon l'une des revendications 1 à 4, **caractérisé en ce que** le point de fusion de la peau (14) est compris entre environ 250 et 300°C.

6. Fil de coupe selon la revendication 5, **caractérisé en ce que** la peau (14) est réalisée en polyamide 66.

7. Fil de coupe selon la revendication 5, **caractérisé en ce que** la peau (14) est réalisée en copolyamide 6/6.

8. Fil de coupe selon la revendication 5, **caractérisé en ce que** la peau (14) est réalisée en un mélange de polyamide ou copolyamide et d'un polyamide aromatique amorphe.

9. Fil de coupe selon l'une des revendications 1 à 8, **caractérisé en ce que** l'épaisseur de la peau (14) est comprise entre environ 0,5 % et 25 % du rayon moyen (RM) du fil.

## Claims

1. A cutting wire (10) for a brush or edge cutter or trimmer, comprising a core (12) coated by a skin (14), wherein the core consists of a polyamide or copolyamide and the skin consists of a polyamide or copolyamide which is different from that of the core, **characterized in that** the melting point of the polyamide or copolyamide making up the skin is above that of the core, so as to limit sticking phenomena notably caused by friction, relatively to those which would be obtained with the material of the core, and **in that** the outer surface of the skin is smooth.

2. The cutting wire according to claim 1, **characterized in that** the melting point of the core (12) is between about 190°C and 220°C.

3. The cutting wire according to claim 2, **characterized in that** the core (12) is made in polyamide 6.

4. The cutting wire according to claim 2, **characterized in that** the core (12) is made in copolyamide.

5. The cutting wire according to any of claims 1 to 4, **characterized in that** the melting point of the skin (14) is between about 250 and 300°C.

6. The cutting wire according to claim 5, **characterized in that** the skin (14) is made in polyamide 66.

7. The cutting wire according to claim 5, **characterized in that** the skin (14) is made in copolyamide 6/6.

8. The cutting wire according to claim 5, **characterized in that** the skin (14) is made in a mixture of polyamide or copolyamide and of an amorphous aromatic polyamide.

9. The cutting wire according to any of claims 1 to 8, **characterized in that** the thickness of the skin (14) is between about 0.5% and 25% of the mean radius (MR) of the wire.

## Patentansprüche

1. Schneiddraht (10) für Schneidgeräte oder zum Schneiden von Pflanzen, der eine Seele (12) umfasst, die mit einer Haut (14) ummantelt ist, wobei die Seele aus einem Polyamid oder einem Co-Polyamid besteht, und die Haut aus einem Polyamid oder einem Co-Polyamid besteht, das von dem der Seele unterschiedlich ist, **dadurch gekennzeichnet, dass** der Schmelzpunkt des die Haut (14) bildenden Polyamids oder Co-Polyamids über dem der Seele liegt, um Klebeerscheinungen vor allem durch Reibung zu begrenzen gegenüber denen, die mit dem Material der Seele auftreten würden, und **dadurch,** dass die äußere Oberfläche der Haut glatt ist.

2. Schneiddraht nach Anspruch 1, **dadurch gekennzeichnet, dass** der Schmelzpunkt der Seele (12) zwischen zirka 190 °C und 220 °C inklusive ist.

3. Schneiddraht nach Anspruch 2, **dadurch gekennzeichnet, dass** die Seele (12) aus Polyamid 6 hergestellt ist.

4. Schneiddraht nach Anspruch 2, **dadurch gekennzeichnet, dass** die Seele (12) aus Co-Polyamid hergestellt ist.

5. Schneiddraht nach einem der Ansprüche 1 bis 4, **dadurch gekennzeichnet, dass** der Schmelzpunkt der Haut (14) zwischen zirka 250 und 300 °C inklusive ist.

6. Schneiddraht nach Anspruch 5, **dadurch gekennzeichnet, dass** die Haut (14) aus Polyamid 66 hergestellt ist.

7. Schneiddraht nach Anspruch 5, **dadurch gekennzeichnet, dass** die Haut (14) aus Co-Polyamid 6/6 hergestellt ist.

8. Schneiddraht nach Anspruch 5, **dadurch gekennzeichnet, dass** die Haut (14) aus einer Mischung aus Polyamid oder Co-Polyamid und einem amorphen aromatischen Polyamid hergestellt ist.

9. Schneiddraht nach einem der Ansprüche 1 bis 8, **dadurch gekennzeichnet, dass** die Dicke der Haut (14) zwischen zirka 0,5 % und 25 % inklusive des durchschnittlichen Radius (DR) des Drahts beträgt.

10

14

12

<u>FIG.1</u>

10

14 12

<u>FIG.2a</u>

10

12

14

<u>FIG.2b</u>

10

12

14

<u>FIG.2c</u>

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0867108 A1

- DE 4321650 C1